# EUROPEAN PATENT SPECIFICATION

(11) **EP 4 582 710 B1**
(45) Date of publication and mention of the grant of the patent: **30.09.2026**
(21) Application number: 24150343.2
(22) Date of filing: 04.01.2024
(51) Int. Cl.: H02K 5/173, F16C 19/52, F16C 19/06, H02K 11/40

(54) **ANTI-ELECTROLYTIC CORROSION CONDUCTIVE RING USING CONDUCTIVE FIBER**
ANTI-ELEKTROLYTISCHER KORROSIONSLEITENDER RING MIT LEITFÄHIGER FASER
ANNEAU CONDUCTEUR DE CORROSION ANTI-ÉLECTROLYTIQUE UTILISANT UNE FIBRE CONDUCTRICE

(43) Date of publication of application: 09.07.2025
(73) Proprietor: Pyunghwa Oil Seal Industry Co., Ltd., Daegu 42982 (KR)
(72) Inventor: PARK, Eun Min, 42242 Daegu (KR)
(74) Representative: BCKIP Part mbB

(56) References cited:
- US-A1- 2022 247 284
- US-A1- 2022 311 315

## Description

### BACKGROUND

### Field of the Invention

The present invention relates to an anti-electrolytic corrosion conductive ring using a conductive fiber, and more particularly, to an anti-electrolytic corrosion conductive ring using a conductive fiber, which reduces a manufacturing cost due to a simple structure thereof compared to a conventional anti-electrolytic corrosion device, which is applicable to various types of motors, and which is capable of effectively preventing an electrolytic corrosion phenomenon. The present invention further relates to a motor comprising the anti-electrolytic corrosion conductive ring.

### Description of the Related Art

In general, when a motor is driven, a potential difference occurs between an inner ring and an outer ring of a bearing due to a voltage induced in a shaft penetrating the motor, which causes flow of current C through a thin lubricant film. In this case, a spark occurs between races and balls or rollers of the motor bearing, resulting in the generation of noise, heat, and vibration in the bearing.

That is, an electrolytic corrosion phenomenon occurs due to the shaft current C. Frequent occurrence of electrolytic corrosion causes damage to the bearing, shortening of the lifespan of the bearing, and malfunction or sudden operation stop of the motor or a load device, making the operation of the motor unstable, resulting in inconvenience of having to repair or replace the motor.

In particular, in the case of a high-voltage or large-capacity motor, replacement with a new bearing or a new motor incurs a high cost and requires a very long time period, leading to significant losses.

As a component for solving the above problems, a grounding brush (carbon brush), an insulated bearing, or a shaft grounding ring (SGR), which is a shaft current grounding device, may be used. The grounding brush has a short lifespan, due to friction and wear, and a current C greater than a predetermined value does not flow through the grounding brush due to contact resistance, whereby the bearing may be damaged due to the residual current C. In addition, the insulated bearing or the SGR incurs a high cost and it is necessary to disassemble the motor or to perform a perforation process when mounting the same, thus requiring expert installation. Further, there is inconvenience of having to purchase an insulated bearing or an SGR having different specifications according to the diameter of the shaft of the motor.

In addition to the above-described components, "DEVICE FOR PREVENTING ELECTROLYTE CORROSION OF BEARING" is disclosed in Korean Patent Laid-Open Publication No. 10-2021-0055465 as a related art capable of preventing electrolyte corrosion of a bearing.

However, the device of the related art has a shape of surrounding a shaft, and a main body thereof that fixes a grounding brush is in contact with the outer circumferential surface of the shaft. Therefore, when the shaft rotates due to operation of a motor, the shaft may be damaged or worn, and the rotational force thereof may be reduced due to friction with the grounding device.

Further, since the preventing device of the related art has a complicated structure, the production and sales costs thereof are likely to be high. Furthermore, since the shaft penetrates the preventing device of the related art, there is inconvenience of having to use a preventing device having different specifications according to the diameter of the shaft.

Korean Patent Laid-Open Publication No. 10-2021-0055465 discloses a device for preventing electrolyte corrosion of bearing.

US 2022 / 0 311 315 A1 and US 2022 / 0 247 284 A1 each disclose examples of a shaft grounding rings.

US 2022/247284 A1 discloses an anti-electrolytic corrosion conductive ring according to the preamble of claim 1.

### SUMMARY OF THE INVENTION

The present invention has been made to solve the above problems, and it is an object of the present invention to provide an anti-electrolytic corrosion conductive ring using a conductive fiber, which reduces a manufacturing cost due to a simple structure thereof compared to a conventional anti-electrolytic corrosion device, which is applicable to various types of motors, and which is capable of effectively preventing an electrolytic corrosion phenomenon.

In addition, it is another object of the present invention to provide an anti-electrolytic corrosion conductive ring, which allows a generated current to effectively flow to the ground without remaining by increasing a friction area between a conductive fiber part and a ring frame, thereby effectively preventing an electrolytic corrosion phenomenon and consequently, improving the lifespan and operational efficiency of a motor including a bearing.

However, the objects to be accomplished by the invention are not limited to the above-mentioned objects, and other objects not mentioned herein will be clearly understood by those skilled in the art from the following description.

To this end, the present invention provides an anti-electrolytic corrosion conductive ring in accordance with claim 1, and a motor in accordance with claim 4.

In accordance with the present invention, the above and other objects can be accomplished by the provision of an anti-electrolytic corrosion conductive ring using a conductive fiber, which is coupled to a housing of a motor to prevent electrolytic corrosion of a bearing due to a current generated in a shaft. The anti-electrolytic corrosion conductive ring includes a ring frame coupled to the housing and a conductive fiber part fixedly coupled to one side of the ring frame and tightly contacting the outer circumferential surface of the shaft. The ring frame is formed in a shape of a ring made of metal, and includes a housing coupling portion coupled to the housing and a fiber part coupling portion extending from a side end of the housing coupling portion toward the shaft in a direction perpendicular to the housing coupling portion. The conductive fiber part is in tight contact with and coupled to one surface of the fiber part coupling portion so that a current generated in the shaft flows to the ring frame along the conductive fiber part and then flows to the housing, whereby electrolytic corrosion of the bearing in the motor is prevented.

In addition, the conductive fiber part may be made of carbon fiber or a non-woven fabric containing nickel.

According to the invention, the conductive fiber part includes an upper end protruding further than the outer circumferential surface of the ring frame to tightly contact the inner side surface of the housing and a lower end extending toward the shaft to tightly contact the outer circumferential surface of the shaft.

Further, the conductive fiber part includes an upper bent portion formed at the upper end thereof tightly contacting the inner side surface of the housing and a lower bent portion formed at the lower end thereof tightly contacting the outer circumferential surface of the shaft, and the upper bent portion and the lower bent portion are bent in a lateral direction in which the shaft protrudes to the outside of the motor.

In addition, the fiber part coupling portion may include a frictional contact surface, which is formed on a surface of the fiber part coupling portion tightly contacting the conductive fiber part and has a hatching pattern formed thereon, and a plurality of fitting protrusions protruding perpendicularly from the frictional contact surface. The conductive fiber part may include a plurality of fitting recesses concavely formed in a surface thereof tightly contacting the frictional contact surface, and the plurality of fitting recesses may be identical in shape and number to the plurality of fitting protrusions. When the conductive fiber part is coupled to the fiber part coupling portion, the plurality of fitting protrusions may be fitted into the plurality of fitting recesses.

### BRIEF DESCRIPTION OF THE DRAWINGS

The above and other objects, features, and other advantages of the present invention will be more clearly understood from the following detailed description taken in conjunction with the accompanying drawings, in which:
FIG. 1 is a cross-sectional view showing the mounted state of an anti-electrolytic corrosion conductive ring using a conductive fiber according to the present invention;
FIG. 2 is a view showing the external appearance of the anti-electrolytic corrosion conductive ring using a conductive fiber according to the present invention;
FIG. 3 is a partially enlarged cross-sectional view of the anti-electrolytic corrosion conductive ring using a conductive fiber according to the present invention;
FIG. 4 is a view showing the coupling structure between a motor and the anti-electrolytic corrosion conductive ring using a conductive fiber according to the present invention;
FIG. 5 is a view schematically showing the flow of current C in a shaft;
FIG. 6 is a view showing another embodiment of the anti-electrolytic corrosion conductive ring using a conductive fiber according to the present invention; and
FIG. 7 is a partially enlarged cross-sectional view of another embodiment of the anti-electrolytic corrosion conductive ring using a conductive fiber according to the present invention.

### DETAILED DESCRIPTION OF THE INVENTION

The present invention may make various changes and have various embodiments, and specific embodiments are illustrated and described in the drawings.

However, this is not intended to limit the present invention to a specific embodiment. Similar reference numerals are used to refer to similar elements in describing the drawings.

It will be understood that when a component is referred to as being "connected to" or "coupled to" another component, it may be directly connected to or coupled to another component, or intervening components may be present. On the other hand, when a component is referred to as being "directly connected to" or "directly coupled to" another component, there are no intervening components present.

The terminology used herein is for the purpose of describing particular embodiments only and is not intended to be limiting of exemplary embodiments of the disclosure. As used herein, the singular forms are intended to include the plural forms as well, unless the context clearly indicates otherwise. It will be further understood that the terms "include" or "have", when used herein, specify the presence of stated features, integers, steps, operations, elements, components, or combinations thereof, but do not preclude the presence or addition of one or more other features, integers, steps, operations, elements, components, or combinations thereof.

Hereinafter, exemplary embodiments of the present invention will be described in detail with reference to the accompanying drawings. Wherever possible, the same reference numerals will be used throughout the drawings to refer to the same or like parts. In the following description of the present invention, a detailed description of known functions or known configurations incorporated herein will be omitted when it may make the subject matter of the present invention rather unclear.

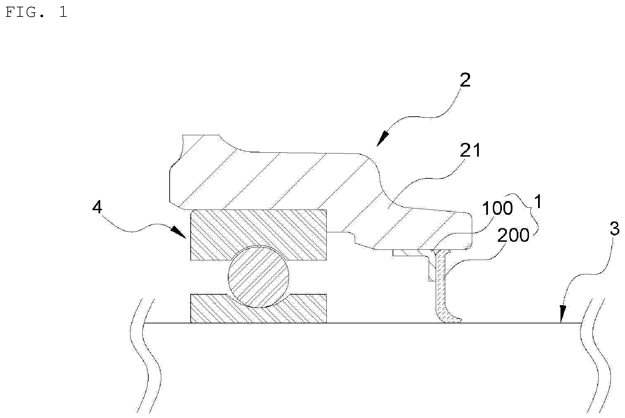

The present invention relates to an anti-electrolytic corrosion conductive ring using a conductive fiber, which reduces a manufacturing cost due to a simple structure thereof compared to a conventional anti-electrolytic corrosion device, which is applicable to various types of motors, and which is capable of effectively preventing an electrolytic corrosion phenomenon. Hereinafter, such an anti-electrolytic corrosion conductive ring 1 will be described with reference to FIGs. 1 to 7.

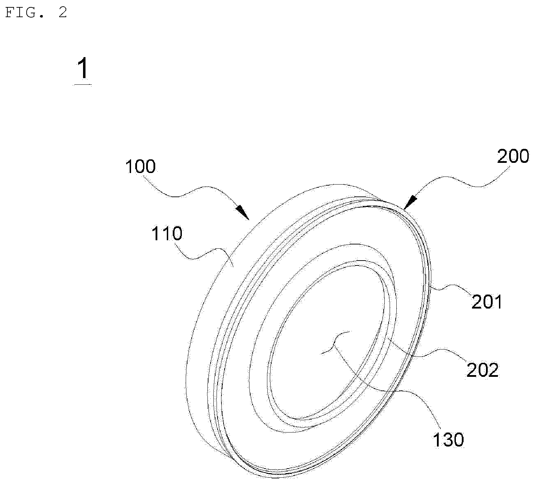

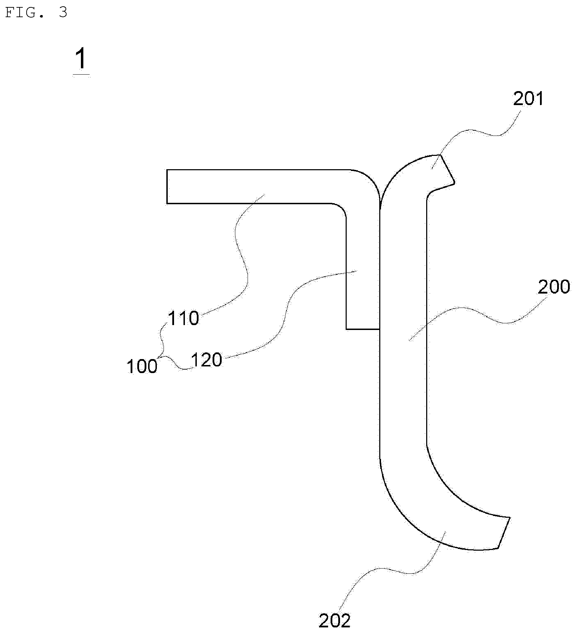

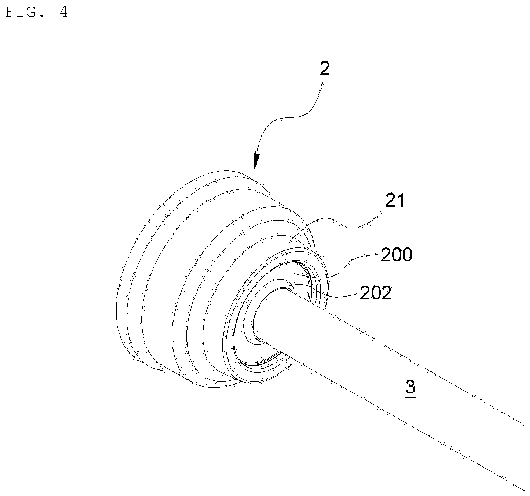

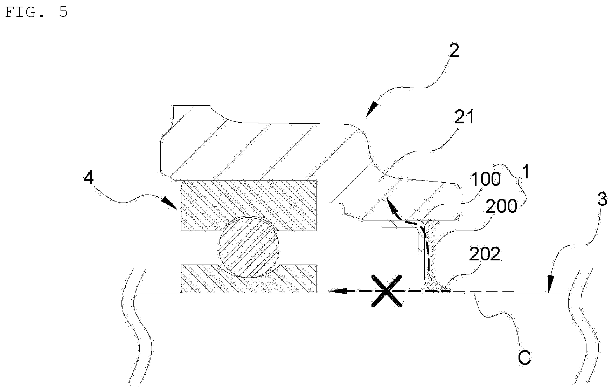

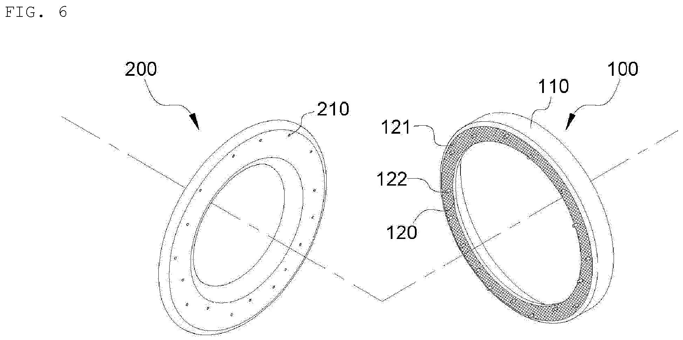

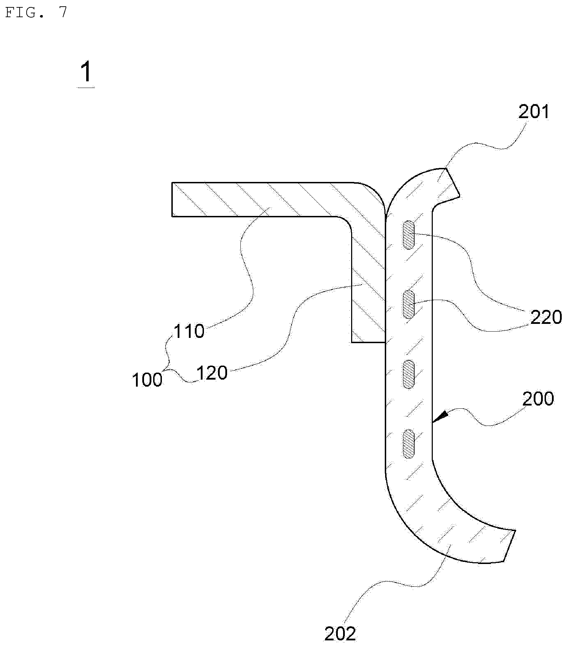

FIG. 1 is a cross-sectional view showing the mounted state of an anti-electrolytic corrosion conductive ring using a conductive fiber according to the present invention. FIG. 2 is a view showing the external appearance of the anti-electrolytic corrosion conductive ring using a conductive fiber according to the present invention. FIG. 3 is a partially enlarged cross-sectional view of the anti-electrolytic corrosion conductive ring using a conductive fiber according to the present invention. FIG. 4 is a view showing the coupling structure between a motor and the anti-electrolytic corrosion conductive ring using a conductive fiber according to the present invention. FIG. 5 is a view schematically showing the flow of current C in a shaft. FIG. 6 is a view showing another embodiment of the anti-electrolytic corrosion conductive ring using a conductive fiber according to the present invention. FIG. 7 is a partially enlarged cross-sectional view of the anti-electrolytic corrosion conductive ring using a conductive fiber according to the present invention.

As shown in FIG. 1, similar to a commonly used motor, a motor 2 to which the conductive ring 1 according to the present invention is applied is configured such that a shaft 3 to which rotational force generated from the motor 2 is transmitted passes through and is coupled to a motor housing 21 and a bearing 4 is disposed between the motor housing 21 and the shaft 3 so that the shaft 3 rotates smoothly. The bearing 4 is preferably implemented as a ball bearing. However, the present invention is not limited thereto.

In the motor 2 configured as described above, a space is present between a side end of the housing 21, through which the shaft 3 passes to be exposed to the outside, and the shaft 3. The conductive ring 1 according to the present invention is mounted in the space between the housing 21 and the shaft 3.

The conductive ring 1 includes a ring frame 100, which has a ring shape and is coupled to the housing 21 of the motor 2, and a conductive fiber part 200, which is disposed on one side of the ring frame 100 and includes one end coupled to the ring frame 100 and the other end extending so as to be in tight contact with the outer circumferential surface of the shaft 3.

The ring frame 100 is disposed on the side end of the housing 21 through which the shaft 3 passes, and is fixedly coupled to the housing 21. The ring frame 100 includes a housing coupling portion 110, which is coupled to the inner side surface of the inner end of the housing 21 so as to be in tight contact therewith, and a fiber part coupling portion 120, which is bent and extends vertically from one end of the housing coupling portion 110 so as to be perpendicular to the housing coupling portion 110 toward the outer circumferential surface of the shaft 3.

The housing coupling portion 110 has a ring shape, and a separate coupling process (e.g., a perforation process) is performed on the upper surface of the housing coupling portion 110, i.e., the surface tightly contacting the inner side surface of the housing 21, so that the housing coupling portion 110 tightly contacts and is fixedly coupled to the inner side surface of the housing 21.

In this case, the housing coupling portion 110 is disposed on the inner side surface of the side portion of the housing 21, through which the shaft 3 passes, and is fixedly coupled to the housing 21 so as not to protrude to the outside of the housing 21, whereby the conductive ring 1 including the housing coupling portion 110 is not exposed to the outside. Accordingly, it may be possible to prevent the conductive ring 1 from being contaminated or damaged by external impact or dust.

The fiber part coupling portion 120 is bent and extends vertically from the end of the housing coupling portion 110 that faces the outside of the housing 21, i.e., the end oriented in the direction in which the shaft 3 is exposed to the outside, toward the shaft 3.

One side surface of the upper end of the fiber part coupling portion 120 is coupled to the housing coupling portion 110 so as to be perpendicular thereto, and the other side surface of the fiber part coupling portion 120 is coupled to the conductive fiber part 200. In this case, the fiber part coupling portion 120 and the conductive fiber part 200 may be adhered to each other by means of a separate adhesive.

In this case, a frictional contact surface 121 providing high frictional force may be formed on the surface of the fiber part coupling portion 120 that tightly contacts the conductive fiber part 200 in order to improve the adhesion to the conductive fiber part 200.

The frictional contact surface 121 is formed on the surface of the fiber part coupling portion 120 made of metal that tightly contacts the conductive fiber part 200, and has an engraved hatching pattern. An adhesive is applied to the frictional contact surface 121 so that one surface of the conductive fiber part 200 is tightly adhered to the frictional contact surface 121. Further, due to friction between the frictional contact surface 121 and the conductive fiber part 200, it may be possible to prevent the conductive fiber part 200 from being easily separated from the ring frame 100 by vibration transmitted to the ring frame 100 from the motor 2.

In addition, the conductive fiber part 200 may include fitting recesses 210 formed concavely therein, and the frictional contact surface 121 may include fitting protrusions 122 protruding therefrom at positions corresponding to the fitting recesses 210.

As shown in FIG. 6, the fitting protrusions 122 are scattered on the frictional contact surface 121 in order to increase the friction area between the frictional contact surface 121 and the conductive fiber part 200, thereby effectively preventing electrolytic corrosion and improving the adhesion between the conductive fiber part 200 and the fiber part coupling portion 120 together with the adhesive.

In side view of FIG. 3, the above-described conductive ring 1 has a "¬" shape. The fiber part coupling portion 120 is bent and extends toward the shaft 3 such that a distal end thereof does not contact the shaft 3, and the conductive fiber part 200 is coupled to the fiber part coupling portion 120 so as to be in tight contact therewith.

In addition, the housing coupling portion 110 and the fiber part coupling portion 120 may be integrally formed with each other. The ring frame 100 is made of metal, and has a ring shape so as to be coupled to the housing 21 of the motor 2.

The shaft 3 is provided to pass through a central hole 130 in the conductive ring 1, and the inner circumferential surface of the central hole 130, i.e., the distal end of the fiber part coupling portion 120, does not contact the shaft 3. The conductive fiber part 200 extends to contact the shaft 3 in a state of being coupled to the fiber part coupling portion 120. Accordingly, a current C generated in the shaft 3 may flow through the conductive fiber part 200, which is in tight contact with the shaft 3, and the ring frame 100, and may then be transmitted to the housing 21.

The conductive fiber part 200 has a longer length than the fiber part coupling portion 120. The upper end of the conductive fiber part 200 protrudes further than the upper surface of the housing coupling portion 110, i.e., the surface of the housing coupling portion 110 that tightly contacts and is coupled to the housing 21, and the lower end of the conductive fiber part 200 extends further than the distal end of the fiber part coupling portion 120 so as to tightly contact the outer circumferential surface of the shaft 3.

That is, the conductive fiber part 200 transmits a current C received from the shaft 3 to the housing 21 through the ring frame 100. Further, the current C transmitted to the conductive fiber part 200 flows not only to the ring frame 100 but also to the upper end of the conductive fiber part 200 that is in direct contact with the inner side surface of the housing 21 of the motor 2. In this way, the current C may be transmitted in a distributed fashion.

The upper end of the conductive fiber part 200 that is in contact with the inner side surface of the housing 21 is bent to form an upper bent portion 201, and the lower end of the conductive fiber part 200 that is in contact with the outer circumferential surface of the shaft 3 is bent to form a lower bent portion 202.

The upper bent portion 201 is bent in the outward direction of the motor 2, i.e., in a direction away from the housing coupling portion 110, and the lower bent portion 202 is bent in the outward direction of the motor 2 in a state of being in tight contact with the shaft 3.

Therefore, the upper bent portion 201 increases the contact area between the housing 21 and the conductive fiber part 200, and the lower bent portion 202 increases the contact area between the shaft 3 and the conductive fiber part 200. Further, the lower bent portion 202 makes the lower end of the conductive fiber part 200 tightly contact the outer circumferential surface of the shaft 3 while surrounding the same even when the shaft 3 rotates.

One surface of the conductive fiber part 200 is in tight contact with and coupled to the frictional contact surface 121 of the fiber coupling portion 120. In this case, the fitting recesses 210 are concavely formed in the surface of the conductive fiber part 200 so as to be located at positions corresponding to the fitting protrusions 122 formed on the fiber part coupling portion 120 and to have a shape corresponding thereto, whereby the fitting protrusions 122 are fitted into the fitting recesses 210. Accordingly, the conductive fiber part 200 may be fixedly coupled to the ring frame 100 by means of the adhesive applied therebetween and mechanical engagement between the fitting protrusions 122 and the fitting recesses 210.

The conductive fiber part 200 may be made of carbon fiber or a non-woven fabric containing nickel, and such a fibrous conductive fiber part 200 is in tight contact with the shaft 3. Therefore, when the shaft 3 rotates, the shaft 3 is prevented from being worn or damaged by the conductive fiber part 200 tightly contacting the shaft 3.

In addition, since the conductive fiber part 200 is formed to be longer than the fiber part coupling portion 120 of the ring frame 100, the conductive fiber part 200 is easily applied to the shaft 3 irrespective of the diameter of the shaft 3, thereby effectively transmitting the current C generated in the shaft 3 to the housing 21.

Meanwhile, since the conductive fiber part 200 is made of a fiber having a low mass, there is a concern of the conductive fiber part 200 being easily separated from the outer circumferential surface of the shaft 3 according to an environment in which the motor 2 is installed, for example, due to external force such as wind.

In particular, when the shaft 3 has a relatively small diameter, there is a concern that the conductive fiber part 200 may not sufficiently contact the outer circumferential surface of the shaft 3 due to the lower bent portion thereof.

Therefore, the conductive fiber part 200 further includes a weight 220 in order to maintain a downwardly extending state and to sufficiently contact the outer circumferential surface of the shaft 3. This will be described with reference to FIG. 7.

As shown in FIG. 7, the weight 220 having a relatively small size is embedded in the conductive fiber part 200. The weight 220 may be provided in plural. The plurality of weights 220 is embedded in the middle of the conductive fiber part 200 in order to continuously maintain the state in which the conductive fiber part 200 extends to the shaft 3 and to avoid direct collision with the shaft 3. Accordingly, it may be possible to prevent wear of or damage to the outer circumferential surface of the shaft 3.

That is, if the weight 220 embedded in the conductive fiber part 200 directly contacts the shaft 3, noise may occur due to collision between the shaft 3 and the weight 220. Further, frequent collision may cause a problem of wear of and damage to the components.

Therefore, the weight 220 is preferably located above the center of the conductive fiber part 200 in order to avoid collision with the shaft 3 while maintaining the tight contact between the shaft 3 and the lower end of the conductive fiber part 200.

The conductive ring 1 is disposed in the space between the shaft 3 and the motor 2, i.e., inside each of both end portions of the motor 2, from which the shaft 3 protrudes outwards, so as not to be exposed to the outside. Accordingly, the conductive ring 1 is not easily separated from the motor 2 by external force, and guides the current C generated in the shaft 3 to flow to the housing 21 of the motor 2 through the conductive ring 1, thereby preventing the current C from flowing to the bearing 4 coupled to the shaft 3 and consequently, preventing the occurrence of electrolytic corrosion.

Further, unlike the conventional anti-electrolytic corrosion device, the conductive ring 1 according to the present invention is fixed to the motor 2 by directly inserting the conductive ring 1 into the motor 2 from the outside. Accordingly, the conductive ring 1 is easily mounted in the motor 2 without the necessity to disassemble the motor 2 or the shaft 3, and is capable of effectively preventing the occurrence of electrolytic corrosion.

As is apparent from the above description, the anti-electrolytic corrosion conductive ring according to the present invention reduces a manufacturing cost due to a simple structure thereof compared to the conventional anti-electrolytic corrosion device, is applicable to various types of motors, and is capable of effectively preventing an electrolytic corrosion phenomenon.

In addition, the anti-electrolytic corrosion conductive ring according to the present invention allows the generated current to effectively flow to the ground without remaining by increasing the friction area between the conductive fiber part and the ring frame, thereby effectively preventing an electrolytic corrosion phenomenon and consequently, improving the lifespan and operational efficiency of a motor including a bearing.

However, the effects achievable through the present invention are not limited to the above-mentioned effects, and other effects not mentioned herein will be clearly understood by those skilled in the art from the above description.

Although the present invention has been described with reference to embodiments illustrated in the drawings, it is to be understood that the embodiments are merely exemplary. Therefore, the true scope of protection of the present invention should be determined only by the appended claims.

## Claims

1. An anti-electrolytic corrosion conductive ring (1) using a conductive fiber (200), wherein the anti-electrolytic corrosion conductive ring is configured to be coupled to a housing (21) of a motor (2) for preventing electrolytic corrosion of a bearing (4) due to a current (C) generated in a shaft (3), the anti-electrolytic corrosion conductive ring (1) comprising:
a ring frame (100) configured to be coupled to the housing (21); and
a conductive fiber part (200) fixedly coupled to one side of the ring frame (100) and configured to tightly contact an outer circumferential surface of the shaft (3),
wherein the ring frame (100) is formed in a shape of a ring made of metal and comprises:
a housing coupling portion (110) configured to be coupled to the housing (21); and
a fiber part coupling portion (120) extending from a side end of the housing coupling portion (110) toward the shaft (3) in a direction perpendicular to the housing coupling portion (110), and
wherein the conductive fiber part (200) is in tight contact with and coupled to one surface of the fiber part coupling portion (120) so that a current generated in the shaft (3) flows to the ring frame (100) along the conductive fiber part (200) and then flows to the housing (21), whereby electrolytic corrosion of the bearing (4) in the motor (2) is prevented,
wherein the conductive fiber part (200) comprises an upper end protruding further than an outer circumferential surface of the ring frame (100) for tightly contacting an inner side surface of the housing (21), and a lower end extending toward the shaft (3) for tightly contacting an outer circumferential surface of the shaft (3),
wherein the conductive fiber part (200) comprises:
an upper bent portion (201) formed at the upper end thereof for tightly contacting the inner side surface of the housing (21); and
a lower bent portion (202) formed at the lower end thereof for tightly contacting and surrounding the outer circumferential surface of the shaft (3) even when the shaft rotates, and
**characterized in that**
the upper bent portion (201) and the lower bent portion (202) are bent in a lateral direction in which the shaft (3) protrudes to an outside of the motor (2),
and wherein
the conductive fiber part (200) further comprises a plurality of weights (220) embedded in the middle of the conductive fiber part (200).

2. The anti-electrolytic corrosion conductive ring (1) according to claim 1, wherein the conductive fiber part (200) is made of carbon fiber or a non-woven fabric containing nickel.

3. The anti-electrolytic corrosion conductive ring (1) according to claim 1, wherein the fiber part coupling portion (120) comprises:
a frictional contact surface (121) formed on a surface thereof tightly contacting the conductive fiber part (200), the frictional contact surface (121) having a hatching pattern formed thereon; and
a plurality of fitting protrusions (122) protruding perpendicularly from the frictional contact surface (121),
wherein the conductive fiber part (200) comprises a plurality of fitting recesses (210) concavely formed in a surface thereof tightly contacting the frictional contact surface (121), the plurality of fitting recesses (210) being identical in shape and number to the plurality of fitting protrusions (122), and
wherein, when the conductive fiber part (200) is coupled to the fiber part coupling portion (120), the plurality of fitting protrusions (122) is fitted into the plurality of fitting recesses (210).

4. A motor (2), comprising:
a motor housing (21);
a shaft (3) to which rotational force generated from the motor (2) is transmitted, the shaft (3) passing through and being coupled to the motor housing (21);
a bearing (4) disposed between the motor housing (21) and the shaft (3) so that the shaft (3) is allowed to rotate smoothly; and
an anti-electrolytic corrosion conductive ring (1) according to claim 1,
wherein the anti-electrolytic corrosion conductive ring (1) is coupled to the motor housing (21) to prevent electrolytic corrosion of the bearing (4) due to a current generated in the shaft (3),
wherein the ring frame (100), with its housing coupling portion, is coupled to the motor housing (21), and the conductive fiber part (200), with its lower bent portion, tightly contacts and surrounds an outer circumferential surface of the shaft (3) and with its upper bent portion tightly contacts the inner side surface of the motor housing (21).

## Patentansprüche

1. Leitfähiger Ring (1) zur Verhinderung elektrolytischer Korrosion unter Verwendung einer leitfähigen Faser (200), wobei der leitfähige Ring zur Verhinderung elektrolytischer Korrosion dazu eingerichtet ist, mit einem Gehäuse (21) eines Motors (2) gekoppelt zu werden, um eine elektrolytische Korrosion eines Lagers (4) aufgrund eines in einer Welle (3) erzeugten Stroms (C) zu verhindern, wobei der leitfähige Ring (1) zur Verhinderung elektrolytischer Korrosion umfasst:
einen Ringrahmen (100), der dazu eingerichtet ist, mit dem Gehäuse (21) gekoppelt zu werden; und
ein leitfähiges Faserteil (200), das fest mit einer Seite des Ringrahmens (100) gekoppelt und dazu eingerichtet ist, in engem Kontakt mit einer Außenumfangsfläche der Welle (3) zu stehen,
wobei der Ringrahmen (100) in Form eines aus Metall hergestellten Rings ausgebildet ist und umfasst:
einen Gehäusekopplungsabschnitt (110), der dazu eingerichtet ist, mit dem Gehäuse (21) gekoppelt zu werden; und
einen Faserteilkopplungsabschnitt (120), der sich von einem Seitenende des Gehäusekopplungsabschnitts (110) in einer zu dem Gehäusekopplungsabschnitt (110) senkrechten Richtung zur Welle (3) hin erstreckt, und
wobei das leitfähige Faserteil (200) mit einer Fläche des Faserteilkopplungsabschnitts (120) in engem Kontakt steht und mit dieser gekoppelt ist, sodass ein in der Welle (3) erzeugter Strom entlang des leitfähigen Faserteils (200) zum Ringrahmen (100) fließt und anschließend zum Gehäuse (21) fließt, wodurch eine elektrolytische Korrosion des Lagers (4) in dem Motor (2) verhindert wird,
wobei das leitfähige Faserteil (200) ein oberes Ende umfasst, das über eine Außenumfangsfläche des Ringrahmens (100) hinaus vorsteht, um in engem Kontakt mit einer inneren Seitenfläche des Gehäuses (21) zu stehen, und ein unteres Ende, das sich zur Welle (3) hin erstreckt, um in engem Kontakt mit einer Außenumfangsfläche der Welle (3) zu stehen,
wobei das leitfähige Faserteil (200) umfasst:
einen oberen Biegeabschnitt (201), der an seinem oberen Ende ausgebildet ist, um in engem Kontakt mit der inneren Seitenfläche des Gehäuses (21) zu stehen; und
einen unteren Biegeabschnitt (202), der an seinem unteren Ende ausgebildet ist, um in engem Kontakt mit der Außenumfangsfläche der Welle (3) zu stehen und diese auch dann zu umgeben, wenn sich die Welle dreht; und
**dadurch gekennzeichnet, dass**
der obere Biegeabschnitt (201) und der untere Biegeabschnitt (202) in einer seitlichen Richtung gebogen sind, in der die Welle (3) zur Außenseite des Motors (2) vorsteht,
und wobei das leitfähige Faserteil (200) ferner mehrere Gewichte (220) umfasst, die in der Mitte des leitfähigen Faserteils (200) eingebettet sind.

2. Leitfähiger Ring (1) zur Verhinderung elektrolytischer Korrosion nach Anspruch 1, wobei das leitfähige Faserteil (200) aus Kohlenstofffaser oder einem nickelhaltigen Vliesstoff hergestellt ist.

3. Leitfähiger Ring (1) zur Verhinderung elektrolytischer Korrosion nach Anspruch 1, wobei der Faserteilkopplungsabschnitt (120) umfasst:
eine Reibkontaktfläche (121), die an einer Fläche desselben ausgebildet ist, welche in engem Kontakt mit dem leitfähigen Faserteil (200) steht, wobei auf der Reibkontaktfläche (121) ein Schraffurmuster ausgebildet ist; und
mehrere Passvorsprünge (122), die senkrecht von der Reibkontaktfläche (121) vorstehen,
wobei das leitfähige Faserteil (200) mehrere Passausnehmungen (210) umfasst, die konkav in einer Fläche desselben ausgebildet sind, welche in engem Kontakt mit der Reibkontaktfläche (121) steht, wobei die mehreren Passausnehmungen (210) hinsichtlich Form und Anzahl mit den mehreren Passvorsprüngen (122) identisch sind, und
wobei, wenn das leitfähige Faserteil (200) mit dem Faserteilkopplungsabschnitt (120) gekoppelt ist, die mehreren Passvorsprünge (122) in die mehreren Passausnehmungen (210) eingepasst sind.

4. Motor (2), umfassend:
ein Motorgehäuse (21);
eine Welle (3), auf die eine von dem Motor (2) erzeugte Rotationskraft übertragen wird, wobei die Welle (3) durch das Motorgehäuse (21) hindurchtritt und mit diesem gekoppelt ist;
ein Lager (4), das zwischen dem Motorgehäuse (21) und der Welle (3) angeordnet ist, sodass sich die Welle (3) reibungslos drehen kann; und
einen leitfähigen Ring (1) zur Verhinderung elektrolytischer Korrosion nach Anspruch 1,
wobei der leitfähige Ring (1) zur Verhinderung elektrolytischer Korrosion mit dem Motorgehäuse (21) gekoppelt ist, um eine elektrolytische Korrosion des Lagers (4) aufgrund eines in der Welle (3) erzeugten Stroms zu verhindern,
wobei der Ringrahmen (100) mit seinem Gehäusekopplungsabschnitt mit dem Motorgehäuse (21) gekoppelt ist und das leitfähige Faserteil (200) mit seinem unteren Biegeabschnitt in engem Kontakt mit einer Außenumfangsfläche der Welle (3) steht und diese umgibt und mit seinem oberen Biegeabschnitt in engem Kontakt mit der inneren Seitenfläche des Motorgehäuses (21) steht.

## Revendications

1. Anneau conducteur de prévention de la corrosion électrolytique (1) utilisant une fibre conductrice (200), dans lequel l'anneau conducteur de prévention de la corrosion électrolytique est configuré pour être couplé à un boîtier (21) d'un moteur (2) afin d'empêcher la corrosion électrolytique d'un palier (4) due à un courant (C) généré dans un arbre (3), l'anneau conducteur de prévention de la corrosion électrolytique (1) comprenant :
une armature annulaire (100) configurée pour être couplée au boîtier (21) ; et
une partie en fibre conductrice (200) couplée de manière fixe à un côté de l'armature annulaire (100) et configurée pour être en contact étroit avec une surface circonférentielle extérieure de l'arbre (3),
dans lequel l'armature annulaire (100) est formée sous la forme d'un anneau en métal et comprend :
une partie de couplage au boîtier (110) configurée pour être couplée au boîtier (21) ; et
une partie de couplage à la partie en fibre (120) s'étendant depuis une extrémité latérale de la partie de couplage au boîtier (110) vers l'arbre (3) dans une direction perpendiculaire à la partie de couplage au boîtier (110), et
dans lequel la partie en fibre conductrice (200) est en contact étroit avec une surface de la partie de couplage à la partie en fibre (120) et couplée à celle-ci, de sorte qu'un courant généré dans l'arbre (3) s'écoule vers l'armature annulaire (100) le long de la partie en fibre conductrice (200), puis s'écoule vers le boîtier (21), ce qui empêche la corrosion électrolytique du palier (4) dans le moteur (2),
dans lequel la partie en fibre conductrice (200) comprend une extrémité supérieure faisant saillie au-delà d'une surface circonférentielle extérieure de l'armature annulaire (100) pour être en contact étroit avec une surface latérale intérieure du boîtier (21), et une extrémité inférieure s'étendant vers l'arbre (3) pour être en contact étroit avec une surface circonférentielle extérieure de l'arbre (3),
dans lequel la partie en fibre conductrice (200) comprend :
une partie courbée supérieure (201) formée à son extrémité supérieure pour être en contact étroit avec la surface latérale intérieure du boîtier (21) ; et
une partie courbée inférieure (202) formée à son extrémité inférieure pour être en contact étroit avec la surface circonférentielle extérieure de l'arbre (3) et entourer celle-ci même lorsque l'arbre tourne ; et
**caractérisé en ce que**
la partie courbée supérieure (201) et la partie courbée inférieure (202) sont courbées dans une direction latérale dans laquelle l'arbre (3) fait saillie vers l'extérieur du moteur (2),
et dans lequel la partie en fibre conductrice (200) comprend en outre une pluralité de poids (220) incorporés dans la partie médiane de la partie en fibre conductrice (200).

2. Anneau conducteur de prévention de la corrosion électrolytique (1) selon la revendication 1, dans lequel la partie en fibre conductrice (200) est constituée de fibre de carbone ou d'un tissu non tissé contenant du nickel.

3. Anneau conducteur de prévention de la corrosion électrolytique (1) selon la revendication 1, dans lequel la partie de couplage à la partie en fibre (120) comprend :
une surface de contact par frottement (121) formée sur une surface de celle-ci qui est en contact étroit avec la partie en fibre conductrice (200), un motif de hachures étant formé sur la surface de contact par frottement (121) ; et
une pluralité de saillies d'emboîtement (122) faisant saillie perpendiculairement à partir de la surface de contact par frottement (121),
dans lequel la partie en fibre conductrice (200) comprend une pluralité d'évidements d'emboîtement (210) formés de manière concave dans une surface de celle-ci qui est en contact étroit avec la surface de contact par frottement (121), la pluralité d'évidements d'emboîtement (210) étant identique, quant à la forme et au nombre, à la pluralité de saillies d'emboîtement (122), et
dans lequel, lorsque la partie en fibre conductrice (200) est couplée à la partie de couplage à la partie en fibre (120), la pluralité de saillies d'emboîtement (122) est emboîtée dans la pluralité d'évidements d'emboîtement (210).

4. Moteur (2), comprenant :
un boîtier de moteur (21) ;
un arbre (3) auquel une force de rotation générée par le moteur (2) est transmise, l'arbre (3) traversant le boîtier de moteur (21) et étant couplé à celui-ci ;
un palier (4) disposé entre le boîtier de moteur (21) et l'arbre (3) de manière à permettre à l'arbre (3) de tourner en douceur ; et
un anneau conducteur de prévention de la corrosion électrolytique (1) selon la revendication 1,
dans lequel l'anneau conducteur de prévention de la corrosion électrolytique (1) est couplé au boîtier de moteur (21) afin d'empêcher la corrosion électrolytique du palier (4) due à un courant généré dans l'arbre (3),
dans lequel l'armature annulaire (100), avec sa partie de couplage au boîtier, est couplée au boîtier de moteur (21), et la partie en fibre conductrice (200), avec sa partie courbée inférieure, est en contact étroit avec une surface circonférentielle extérieure de l'arbre (3) et entoure celle-ci et, avec sa partie courbée supérieure, est en contact étroit avec la surface latérale intérieure du boîtier de moteur (21).
